# EUROPÄISCHE PATENTSCHRIFT

(11) **EP 0 716 489 B1**
(45) Veröffentlichungstag und Bekanntmachung des Hinweises auf die Patenterteilung: **14.04.1999**
(21) Anmeldenummer: 95250293.8
(22) Anmeldetag: 27.11.1995
(51) Int. Cl.: H02B 13/065

(54) **Metallgekapselte Hochspannungsschaltanlage**
Metal-clad high voltage switchgear
Appareillage de commutation à haute tension blindée

(30) Priorität: 07.12.1994 DE 9420199 U
(43) Veröffentlichungstag der Anmeldung: 12.06.1996
(73) Patentinhaber: SIEMENS AKTIENGESELLSCHAFT, 80333 München (DE)
(72) Erfinder: Lorenz, Dieter, D-12207 Berlin (DE)

(56) Entgegenhaltungen:
- EP-A- 0 197 778
- EP-A- 0 509 328
- WO-A-83/01511
- DE-A- 4 133 947
- DE-U- 9 420 199
- FR-A- 2 222 777
- GB-A- 2 243 450

## Beschreibung

Die Erfindung bezieht sich auf eine metallgekapselte Hochspannungsschaltanlage, die ein Isoliergas enthält.

Gekapselte Hochspannungsschaltanlagen sind auf dem Gebiet der Energieverteilung seit langem bekannt. Sie haben vor Freiluftschaltanlagen den Vorteil eines geringen Platzbedarfes trotz großer dielektrischer Sicherheit. Zur Steigerung der elektrischen Durchschlagsfestigkeit sind die Metallkapselungen mit einem Isoliergas, beispielsweise Schwefelhexafluorid SF₆ gefüllt.

Da die Schaltvorgänge bei solchen Anlagen im Inneren einer Metallkapselung stattfinden, stellt die Überwachung und Kontrolle besondere Anforderungen an die Meßtechnik. Insbesondere muß sichergestellt werden, daß die beim Schalten oder auch durch Fehlfunktionen entstehenden Lichtbogen detektiert und analysiert werden können. In dem Hitachi-Review Vol. 40 (1991) Nr. 5, Seiten 359 bis 366 ist beispielsweise ein System zur Analyse von Teilentladungen aufgrund von elektrischen Hochfrequenzsignalen und mechanischen Schwingungsmessungen beschrieben.

Aus der DE 41 33 947 A1 ist eine Schaltanlage der eingangs genannten Art mit einem Sensor bekannt, der der Erfassung von Gasanteilen im Inneren der Kapselung, insbesondere von Zersetzungsprodukten von SF₆ dient.

Der vorliegenden Erfindung liegt die Aufgabe zugrunde, eine metallgekapselte Hochspannungsschaltanlage mit einem einfach zu handhabenden Meßsystem auszustatten, das möglichst störungsfrei arbeitet und möglichst vielfältige Informationen über Vorgänge innerhalb der Metallkapselung liefert.

Die Aufgabe wird erfindungsgemäß gelöst durch ein im Gasraum angeordnetes Oberflächenwellenelement (OFW) zum Nachweis von bestimmten Gasanteilen, insbesondere Zersetzungsprodukten, die durch Lichtbogeneinwirkung auf das Löschgas entstehen.

Aus dem Fachbuch "SOLD STATE GAS SENSORS", PT Moseley and BC Tofield-Verlag, Adam Hilger, Bristol and Philadelphia, Seite 232, letzter Absatz sowie aus der internationalen Patentanmeldung WO-A 83/01511 ist bekannt, daß mittels Oberflächenwellenelementen bestimmte Gasarten nachgewiesen werden können. Wird nun ein OFW so eingerichtet, daß es auf Zersetzungsprodukte des SF₆-Isoliergases reagiert, so bedeutet ein Ansprechen dieses Detektors, daß wenigstens eine Teilentladung oder auch ein Lichtbogen innerhalb des Gasraums aufgetreten ist. Das OFW kann somit zum Nachweis solcher Vorgänge benutzt werden. Ein Vorteil hierbei ist, daß das OFW keine eigene Energieversorgung benötigt und lediglich mit einem Eingangssignal beaufschlagt wird, das durch den Einfluß von Meßgrößen verändert wird und am Ausgang des OFW ein Ausgangssignal erzeugt steht. Dies hat den Vorteil, daß keine elektrische Energieversorgungsleitung durch die Metallkapselung hindurch zu dem OFW hin geführt werden muß. Es müssen lediglich die Signalleitungen durch die Kapselung durchgeführt werden. Gegebenenfalls kann auch zwischen verschiedenen Störungsarten unterschieden werden, wenn diese unterschiedliche Spektren von Zersetzungsprodukten liefern.

Das OFW kann vorteilhaft ebenfalls zur Detektion von Druckwellen eingerichtet sein.

Unter solchen Druckwellen werden z. B. akustische Dichtewellen verstanden, die sich in dem Löschgas ausbreiten oder auch akustische Wellen, die sich durch Festkörper, beispielsweise die Metallwandung der Kapselung der Hochspannungsschaltanlage fortpflanzen. Für solche akustischen Wellen sind OFWs sehr empfindlich, so daß das OFW bei entsprechender Beaufschlagung mit Eingangssignalen sowohl zur Detektion bestimmter Gasarten als auch zur Detektion von akustischen Wellen eingesetzt werden kann, sei es nacheinander oder gleichzeitig.

Durch diese Erfassung von unterschiedlichen Meßgrößen können genauere Angaben über das Geschehen innerhalb der Metallkapselung erhalten werden. Beispielsweise kann durch die Analyse der akustischen Wellen festgestellt werden, ob bestimmte Teilentladungen oder Lichtbögen noch andauern oder ob die nachgewiesenen Zersetzungsprodukte von bereits erloschenen Lichtbögen oder beendeten Teilentladungsvorgängen stammen. Es ist auch denkbar, daß ein OFW gleichzeitig zur Detektion von durch das Isoliergas transportierten und durch Festkörper transportierten Druckwellen verwendet wird, wodurch ein Laufzeitvergleich und ggf. eine Lokalisierung der Störung ermöglicht ist.

Eine weitere vorteilhafte Ausgestaltung der Erfindung sieht eine Kontrolleinrichtung zur Aussendung elektrischer Signale vor, die von einer an der Außenseite der Metallkapselung angeordneten Antenne empfangen, dem CFW zugeleitet und in dem OFW in Abhängigkeit von detektierten Meßwerten verändert werden, wobei die veränderten elektrischen Signale mittels einer Antenne an eine Auswerteeinrichtung gesendet werden.

Durch diese Ausgestaltung der Erfindung ist ein Betrieb des OFW möglich, ohne daß elektrische Zuleitungen in Form von metallischen Kabeln an der Metallkapselung verlegt werden müssen. Dies ist einerseits deshalb vorteilhaft, weil metallische Kabel bei den innerhalb der Schaltanlage vorliegenden unterschiedlichen Potentialen Kurzschlüsse hervorrufen könnten, andererseits wird ein Montageaufwand für die Verlegung von Kabel gespart und es wird verhindert, daß bei der Vielzahl von signalverarbeitenden Elementen innerhalb einer Hochspannungsschaltanlage eine unübersichtliche Vielzahl von Kabeln verlegt werden muß.

Es kann außerdem vorteilhaft vorgesehen sein, daß außer dem OFW ein Detektorelement vorgesehen ist, daß seine Impedanz in Abhängigkeit von einer Meßgröße ändert und dessen elektrische Ausgangswerte dem OFW zugeleitet werden.

Bei einem solchen Detektorelement kann es sich beispielsweise um einen licht- oder temperaturabhängigen Widerstand handeln, so daß das OFW auch auf Veränderungen der Temperatur in der Metallkapselung der Schaltanlage oder auf Lichterscheinungen, wie beispielsweise Lichtbögen reagiert.

Im folgenden wird die Erfindung anhand eines Ausführungsbeispiels in einer Zeichnung gezeigt und anschließend beschrieben.

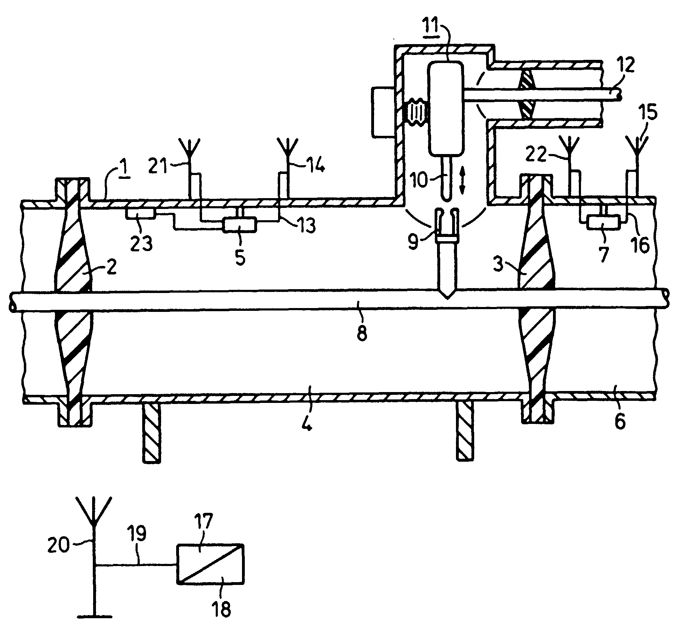

Dabei zeigt die Figur schematisch im Querschnitt einen Teil eines Kapselungsgehäuses einer Hochspannungsschaltanlage mit einem OFW.

Eine Metallkapselung 1 ist in seinem Inneren durch Schottisolatoren 2, 3 in verschiedene Gasräume unterteilt. In einem ersten Gasraum 4 ist ein Oberflächenwellenelement (OFW) 5 angeordnet, während in einem zweiten Gasraum 6 ein zweites Oberflächenwellenelement 7 vorgesehen ist. In dem ersten Gasraum 4 befindet sich ein Hochspannungsleiter 8, der das Kapselungsgehäuse 1 koaxial durchsetzt und durch die Schottisolatoren 2, 3 gasdicht durchgeführt ist. Mit dem Hochspannungsleiter 8 ist ein Tulpenkontakt 9 leitend verbunden, der mit einem beweglichen Kontaktstift 10 eines Trennschalters 11 zusammenwirkt. Mittels des Trennschalters 11 kann der Hochspannungsleiter 8 mit einem weiterführenden Leiter 12 verbunden oder von diesem getrennt werden.

Das OFW 5 ist mittels eines Hochfrequenzkabels 13 mit einer ersten Antenne 14 leitend verbunden, welche an der Außenseite des Kapselungsgehäuses 1 montiert ist.

Es ist außerdem eine zweite Antenne 15 vorgesehen, die mit dem zweiten OFW 7 mittels eines Hochfrequenzkabels 16 in Verbindung steht. Die Durchführungen der Hochfrequenzkabel 13, 16 durch das Kapselungsgehäuse sind jeweils gasdicht ausgeführt.

Es ist außerdem eine kombinierte Kontroll- und Auswerteeinrichtung 17, 18 vorgesehen, wobei in der Kontrolleinrichtung 17 elektrische Signale erzeugt werden, die mittels einer Hochfrequenzleitung 19 zu einer Antenne 20 geleitet und von dort gesendet werden. Die Signale werden von den Antennen 14, 15 der beiden OFWs 5, 7 empfangen und mittels der Hochfrequenzleitungen 13, 16 den OFWs 5, 7 zugeleitet. Die Signale passieren die OFWs 5, 7 und werden dabei in Abhängigkeit von den auf die OFWs einwirkenden Meßgrößen (Beaufschlagung mit bestimmten Gasarten, Druck, Temperatur) verändert. Die Ausgangssignale der OFWs 5, 7 werden jeweils mittels einer weiteren Hochfrequenzleitung einer weiteren Antenne 21, 22 zugeleitet, von wo aus sie zu der im Bereich der Kontroll- und Auswerteeinrichtung 17, 18 befindlichen Antenne 20 gesendet werden.

Die von der Antenne 20 empfangenen Signale werden mittels der Hochfrequenzleitung 19 an die Auswerteeinrichtung 18 gesendet, wo aus einem Vergleich zwischen den Eingangssignalen und den Ausgangssignalen der OFWs die entsprechende Meßgröße, beispielsweise die Konzentration eines bestimmten Gases innerhalb des Gasraums berechnet wird. Es ist denkbar, daß durch die Gestaltung der Eingangssignale der OFWs diese für bestimmte Meßgrößen sensibilisiert werden und daß durch Änderung der Eingangssignale die Sensibilität der OFWs für bestimmte Meßgrößen verändert wird, so daß die OFWs zur Erfassung verschiedener physikalischer Größen benutzt werden können.

Es ist denkbar, die OFWs innerhalb des Kapselungsgehäuses 1 abzuschirmen bzw. sie in Gehäusestutzen unterzubringen, so daß dielektrisch günstige Bedingungen geschaffen werden.

## Patentansprüche

1. Metallgekapselte Hochspannungsschaltanlage, die ein Isoliergas enthält,
gekennzeichnet durch ein in Gasraum angeordnetes Oberflachenwellenelement (OFW) (5, 7) zum Nachweis von bestimmten Gasanteilen, insbesondere Zersetzungsprodukten, die durch Lichtbogeneinwirkung auf das Löschgas entstehen.

2. Metallgekapselte Hochspannungsschaltanlage nach Anspruch 1,
**dadurch gekennzeichnet,** daß
das OFW (5, 7) ebenfalls zur Detektion von Druckwellen eingerichtet ist.

3. Metallgekapselte Hochspannungsschaltanlage nach Anspruch 1 oder 2,
**gekennzeichnet durch,** daß
eine Kontrolleinrichtung (17) zur Aussendung elektrischer Signale, die von einer an der Außenseite der Metallkapselung (1) angeordneten Antenne (14, 15) empfangen, dem OFW (5, 7) zugeleitet und in dem OFW in Abhängigkeit von detektierten Meßwerten verändert werden, wobei die veränderten elektrischen Signale mittels einer Antenne (21, 22) an eine Auswerteeinrichtung (18) gesendet werden.

4. Metallgekapselte Hochspannungsschaltanlage nach Anspruch 1 oder einem der folgenden,
**dadurch gekennzeichnet,** daß
außer dem OFW (5, 7) ein Detektorelement (23)vorgesehen ist, das seine Impedanz in Abhängigkeit von einer Meßgröße ändert und dessen elektrische Ausgangswerte dem OFW (5, 7) zugeleitet werden.

## Claims

1. Metal-enclosed high-voltage switchgear which contains an insulating gas, characterised by a surface acoustic wave element (SAW) (5, 7) arranged in the gas space for detecting certain gas contents, in particular decomposition products, which occur as a result of the effect of arcs on the quenching gas.

2. Metal-enclosed high-voltage switchgear according to claim 1, characterised in that the SAW (5, 7) is also set up to detect pressure waves.

3. Metal-enclosed high-voltage switchgear according to claim 1 or 2, characterised by a checking device (17) for emitting electrical signals which are received by an antenna (14, 15) arranged on the outside of the metal enclosure (1), passed to the SAW (5, 7) and altered in the SAW as a function of detected measured values, with the altered electrical signals being sent to an evaluating device (18) by means of an antenna (21, 22)

4. Metal-enclosed high-voltage switchgear according to claim 1 or one of the following, characterised in that in addition to the SAW (5, 7), there is provided a detector element (23), which altere its impedance as a function of a measured variable and the electrical output values of which are supplied to the SAW (5, 7).

## Revendications

1. Poste de commutation à haute tension à blindage métallique, qui contient un gaz isolant,
**caractérisé** par un élément (5, 7) à ondes de surface disposé dans la chambre de gaz pour déceler des constituants gazeux donnés, notamment des produits de décomposition, qui sont issus de l'action d'arcs électriques sur le gaz d'extinction.

2. Poste de commutation à haute tension à blindage métallique suivant la revendication 1, **caractérisé** en ce que l'élément (5, 7) à ondes de surface est également conçu pour la détection d'ondes de pression.

3. Poste de commutation à haute tension à blindage métallique suivant la revendication 1 ou 2, **caractérisé** par un dispositif (17) de contrôle pour émettre des signaux électriques qui sont reçus par une antenne (14, 15) disposée sur le côté extérieur du blindage (1) métallique, transmis à l'élément (5, 7) à ondes de surface et, dans cet élément, modifiés en fonction de valeurs de mesure détectées, les signaux électriques modifiés étant émis au moyen d'une antenne (21, 22) vers un dispositif (18) d'interprétation.

4. Poste de commutation à haute tension à blindage métallique suivant la revendication 1 ou une des revendications suivantes, **caractérisé** en ce qu'en dehors de l'élément (5, 7) à ondes de surface, il est prévu un élément (23) détecteur, qui modifie son impédance en fonction d'une grandeur de mesure et dont les valeurs de sortie électriques sont transmises à l'élément (5, 7) à ondes de surface.
